# EUROPEAN PATENT APPLICATION

(11) **EP 3 608 538 A1**
(43) Date of publication of application: **12.02.2020**
(21) Application number: 18213380.1
(22) Date of filing: 18.12.2018
(51) Int. Cl.: F03D 17/00, F03D 80/50, G06Q 10/00

(54) **MODEL-BASED REPOWERING SOLUTIONS FOR WIND TURBINES**

(71) Applicant: VESTAS WIND SYSTEMS A/S, 8200 Aarhus N (DK)
(72) Inventor: VALTASAARI, Mika, 2100 København Ø (DK); BAUN, Torben Ladegaard, 8541 Skødstrup (DK)
(74) Representative: Vestas Patents Department

(57) **Abstract**

Embodiments herein describe a method and associated wind turbine. The method comprises acquiring sensor data during operation of one or more wind turbines, and determining, using the sensor data, one or more operational parameters associated with the one or more wind turbines. The method further comprises determining, using the one or more operational parameters, a fatigue value for at least a first component of a first wind turbine of the one or more wind turbines. The method further comprises applying at least the fatigue value to a model, and identifying, using the model, a repowering solution including at least the first component of the first wind turbine.

## Description

### BACKGROUND

### Field of the Invention

Embodiments presented in this disclosure generally relate to repowering solutions for wind turbines using at least fatigue values applied to a model.

### Description of the Related Art

Wind turbines and their components are designed to have finite operational lifetimes, often between twenty (20) and twenty-five (25) years. Further, aging wind turbines typically have a less advanced and/or less efficient design than newer designs. Repowering is one option that extends the operational lifetime of a wind turbine, and may further increase the power capacity of the wind turbine. In a "partial repowering" one or more main components of the wind turbine, such as the rotor and gearbox, are upgraded with more advanced and efficient technology, while other elements such as the tower and foundation are retained for reuse.

Despite approaching the end of the operational lifetime of the wind turbine, the actual wear experienced by wind turbine components during the operational lifetime may support continued usage of the components. In other words, the used components may be used in different applications (e.g., retrofitted into other wind turbines) to extend their operational lifetimes.

### SUMMARY

One embodiment of the present disclosure is a method comprising acquiring sensor data during operation of one or more wind turbines; determining, using the sensor data, one or more operational parameters associated with the one or more wind turbines; determining, using the one or more operational parameters, a fatigue value for at least a first component of a first wind turbine of the one or more wind turbines; applying at least the fatigue value to a model; and identifying, using the model, a repowering solution including at least the first component of the wind turbine.

Beneficially, the model may identify a suitable repowering solution for the first component based on a number of considerations. The repowering solution may be expressed in different forms: e.g., as a target wind turbine in which to install the first component as a replacement component, as a replacement component for replacing the first component in the current wind turbine, as a location (or site) at which a wind turbine that includes the first component may be installed. In this way, the repowering solutions may be applied to an increased number of wind turbines, including different types of wind turbines (e.g., different models and/or manufacturers), wind turbines operated by different operators, and so forth. Thus, use of the model may increase a potential market for used components in repowering solutions. Additionally, used components may have their operational lifetimes extended by application according to the repowering solutions.

Another embodiment of the present disclosure is a computing device comprising one or more computer processors configured to communicatively couple with one or more controllers of one or more wind turbines; receive a fatigue value for at least a first component of a first wind turbine of the one or more wind turbines; apply at least the fatigue value to a model; and identify, using the model, a repowering solution including at least the first component of the first wind turbine.

Beneficially, the model may identify a suitable repowering solution for the first component based on a number of considerations. The repowering solution may be expressed in different forms: e.g., as a target wind turbine in which to install the first component as a replacement component, as a replacement component for replacing the first component in the current wind turbine, as a location (or site) at which a wind turbine that includes the first component may be installed. In this way, the repowering solutions may be applied to an increased number of wind turbines, including different types of wind turbines (e.g., different models and/or manufacturers), wind turbines operated by different operators, and so forth. Thus, use of the model may increase a potential market for used components in repowering solutions. Additionally, used components may have their operational lifetimes extended by application according to the repowering solutions.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates a diagrammatic view of an exemplary wind turbine, according to one or more embodiments.
Figure 2 illustrates a diagrammatic view of internal components of an exemplary nacelle and tower of a wind turbine, according to one or more embodiments.
Figure 3 illustrates a wind power plant operatively connected with an electrical grid, according to one or more embodiments.
Figure 4 is a block diagram illustrating inputs to an exemplary model of a fatigue module, according to one or more embodiments.
Figure 5 is a block diagram illustrating inputs to an exemplary model of a repowering module, according to one or more embodiments.
Figure 6 is a method of identifying a repowering solution for a wind turbine component, according to one or more embodiments.
Figure 7 is a graph illustrating clustering of data for candidate repowering solutions, according to one or more embodiments.
Figure 8 illustrates an exemplary interface for identifying a replacement component, according to one or more embodiments.
Figure 9 illustrates an exemplary interface for identifying a target wind turbine, according to one or more embodiments.
Figure 10 illustrates an exemplary interface for identifying a target site, according to one or more embodiments.

To facilitate understanding, identical reference numerals have been used, where possible, to designate identical elements that are common to the figures. It is contemplated that elements disclosed in one embodiment may be beneficially utilized on other embodiments without specific recitation.

### DESCRIPTION OF EXAMPLE EMBODIMENTS

### EXAMPLE EMBODIMENTS

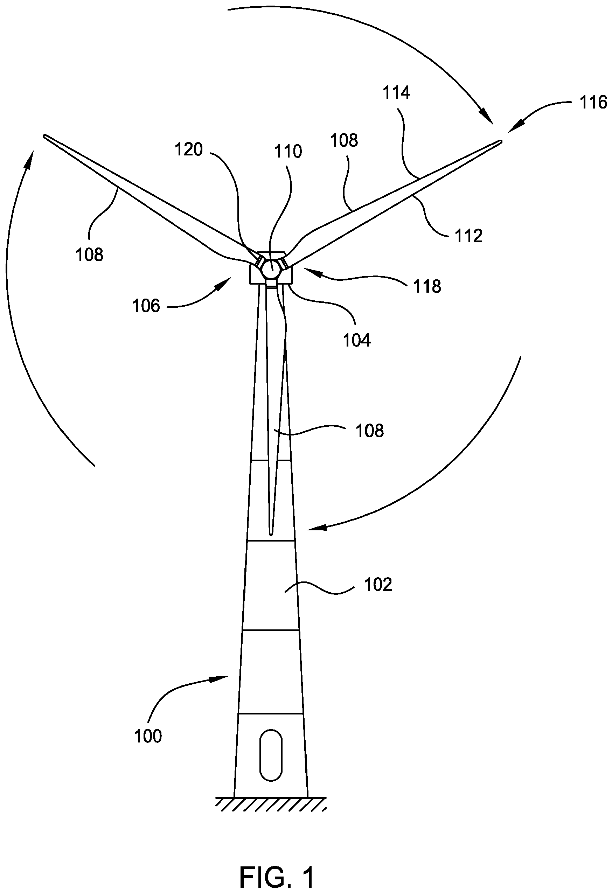

Figure 1 illustrates a diagrammatic view of an exemplary wind turbine 100 (also referred to as a "wind turbine generator" or WTG). Although the wind turbine 100 is illustrated as a horizontal-axis wind turbine, the principles and techniques described herein may be applied to other wind turbine implementations, such as vertical-axis wind turbines. The wind turbine 100 typically comprises a tower 102 and a nacelle 104 located at the top of the tower 102. A rotor 106 may be connected with the nacelle 104 through a low-speed shaft extending out of the nacelle 104. As shown, the rotor 106 comprises three blades 108 mounted on a common hub 110 which rotate in a rotor plane, but the rotor 106 may comprise any suitable number of blades, such as one, two, four, five, or more blades. The blades 108 (or airfoil) typically each have an aerodynamic shape with a leading edge 112 for facing into the wind, a trailing edge 114 at the opposite end of a chord for the blades 108, a tip 116, and a root 118 for attaching to the hub 110 in any suitable manner.

For some embodiments, the blades 108 may be connected to the hub 110 using pitch bearings 120, such that each blade 108 may be rotated around its longitudinal axis to adjust the blade's pitch. The pitch angle of a blade 108 relative to the rotor plane may be controlled by linear actuators, hydraulic actuators, or stepper motors, for example, connected between the hub 110 and the blades 108.

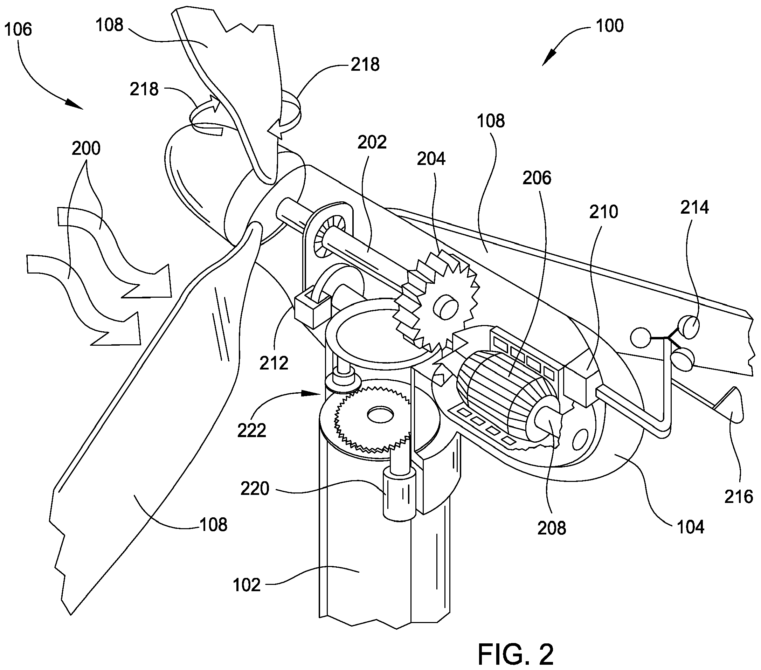

Figure 2 illustrates a diagrammatic view of typical components internal to the nacelle 104 and tower 102 of the wind turbine 100. When the wind 200 is incident on the blades 108, the rotor 106 rotates and rotates a low-speed shaft 202. Gears in a gearbox 204 mechanically convert the low rotational speed of the low-speed shaft 202 into a relatively high rotational speed of a high-speed shaft 208 suitable for generating electricity using a generator 206.

A controller 210 may sense the rotational speed of one or both of the low-speed shaft 202 and the high-speed shaft 208. If the controller 210 determines that the low-speed shaft 202 and/or the high-speed shaft 208 are rotating too fast, the controller 210 may pitch the blades out of the wind and/or may increasing the torque from the generator 206, which slows the rotation (i.e., reduces a revolutions per minute (RPM)) of the rotor 106. A braking system 212 may prevent damage to the components of the wind turbine 100 by preventing the rotor 106 from rotating when the rotor 106 is already at, or very close, to standstill. The controller 210 may also receive inputs from an anemometer 214 (providing wind speed) and/or a wind vane 216 (providing wind direction). Based on information received, the controller 210 may send a control signal to adjust a pitch 218 of one or more of the blades 108. By adjusting the pitch 218 of the blades 108, the rotational speed of the rotor 106 (and therefore, the rotational speed of the low-speed shaft 202 and the high-speed shaft 208) may be increased or decreased. Based on the wind direction, for example, the controller 210 may send a control signal to an assembly comprising a yaw motor 220 and a yaw drive 222 to rotate the nacelle 104 with respect to the tower 102, such that the rotor 106 may be positioned to face more (or, in certain circumstances, less) upwind.

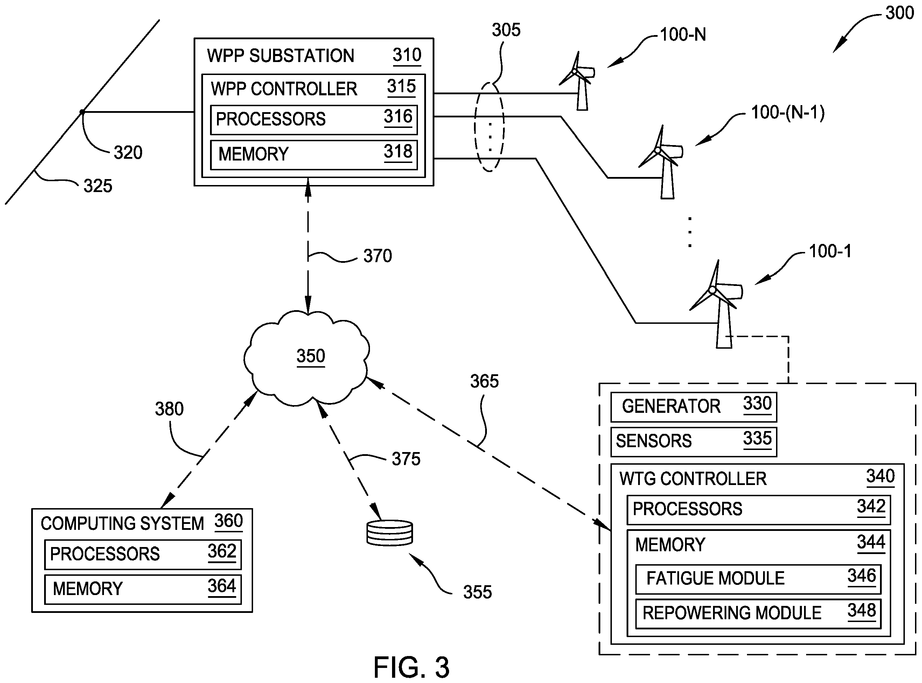

Figure 3 illustrates a wind power plant (or "WPP") 300 operatively connected with an electrical grid 325, according to one embodiment. In general, the WPP 300 may also be referred to as a "wind farm" or "wind park". The WPP 300 includes a plurality of WTGs 100 (i.e., WTGs 100-1, ..., 100-(N-1), 100-N) that are operatively connected with the electrical grid 325 at a point of common coupling (PCC) 320. The electrical grid 325 represents any suitable electrical transmission and/or distribution grids, which may be operated at one or more voltages. The electrical grid 325 is intended to be representative of a number of transmission lines, transformers, substations, power plants, etc.

Each WTG 100-1, ..., 1 00-(N-1), 100-N includes a generator 330 that is configured to convert the mechanical energy of the wind turbine rotor (i.e., the rotor 106 of Figure 1) into one or more phases of electrical power as power outputs 305, which ultimately may be delivered to the electrical grid 325 and to any loads connected therewith. The generator 330 represents one example of the generator 206 of Figure 2, and may be of any suitable type known to a person skilled in the art.

Each WTG 100-1, ..., 100-(N-1), 100-N comprises one or more sensors 335 having any suitable implementation for acquiring sensor data that is indicative of one or more operational parameters of the corresponding WTG 100-1, ..., 100-(N-1), 100-N. Some non-limiting examples of the one or more operational parameters include a wind speed, a tower acceleration, a rotor speed, a pitch angle, an active power, and a blade root bending moment. Another non-limiting example of the one or more operational parameters includes a wind parameter, such as wind speed. In some cases, measurements of the one or more sensors 335 correspond directly to the one or more operational parameters. In other cases, measurements of the one or more sensors 335 correspond indirectly to the one or more operational parameters (e.g., the measurements are combined with other measurements, or otherwise further processed to produce the one or more operational parameters). The one or more operational parameters may be obtained also for non-producing turbines, such as idling and stopped turbines. In this case, the determined fatigue value would then also include the fatigue originating from stand-still loads and other loads occurring under non-producing conditions.

The operation of the wind power plant 300 is controlled using a control arrangement, which includes a WPP controller 315 (also "power plant controller" or "PPC") that is communicatively coupled with one or more WTG controllers 340 via a network 350. As shown, the WPP controller 315 is located at a WPP substation 310, although different locations are also contemplated. In some embodiments, each WTG 100 is controlled by a separate WTG controller 340. In some embodiments, the WTGs 100-1, ..., 100-(N-1), 100-N produce electrical power based on control signals provided by the WPP controller 315 and/or by the WTG controllers 340. The WTG controllers 340 may provide feedback signals and/or other operational information to the WPP controller 315 via the network 350.

The network 350 may include one or more networks of various types, including a personal area network (PAN), a local area or local access network (LAN), a general wide area network (WAN), and/or a public network (e.g., the Internet). As shown, a communicative connection 370 couples the WPP controller 315 with the network 350, and a communicative connection 365 couples the WTG controller 340 with the network 350. The network 350 is further coupled with a remote database 355 via a communicative connection 375, and with a remote computing system 360 via a communicative connection 380. The communicative connections 365, 370, 375, 380 represent any suitable communication means, whether wire-based, wireless, optical, etc. The remote database 355 may store information used by a fatigue module 346 and/or a repowering module 348, which are described in further detail below. For example, the remote database 355 may store sensor data acquired by different WTGs 100, fatigue values associated with components of the WTGs 100, data describing new components that may be used as replacements, and so forth. The remote computing system 360 may be implemented in any suitable form, such as a server. In some embodiments, the remote database 355 is implemented in the remote computing system 360.

The WPP controller 315 controls a collective power output that is delivered by the WPP 300 to the PCC 320. In one embodiment, the power output is an aggregation of the power outputs 305. In another embodiment the power output can include, in addition to the power outputs 305, effects from signal conditioning and/or the operation of other power sources or loads controlled by the WPP controller 315, such as energy storage devices.

The WTG controller 340 comprises one or more computer processors 342 and a memory 344. The one or more computer processors 342 may be implemented in any suitable form, such as a general purpose microprocessor, a controller, an application-specific integrated circuit (ASIC), and so forth. The memory 344 may include a variety of computer-readable media selected for their size, relative performance, or other capabilities: volatile and/or non-volatile media, removable and/or non-removable media, etc. The WPP controller 315 comprises one or more computer processors 316 and/or a memory 318, which may have properties similar to the computer processors 342 and the memory 344 of the WTG controller 340.

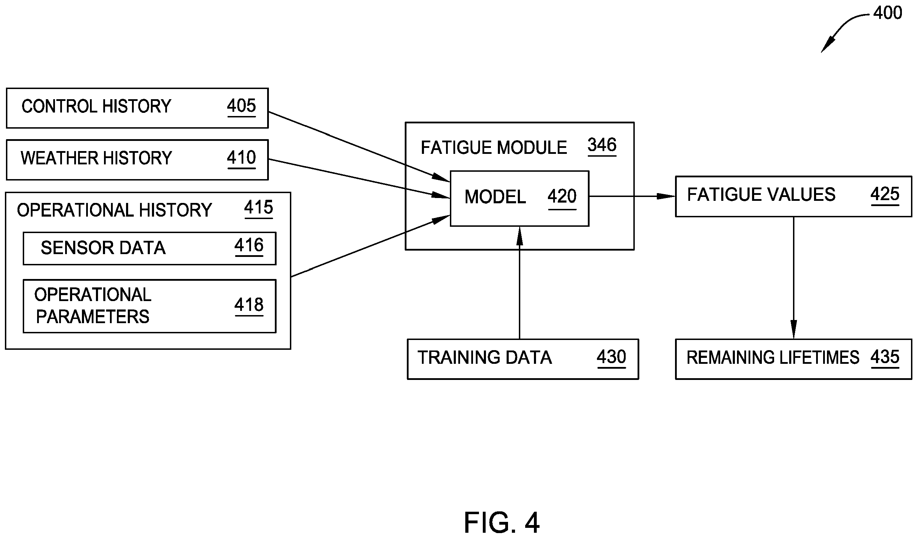

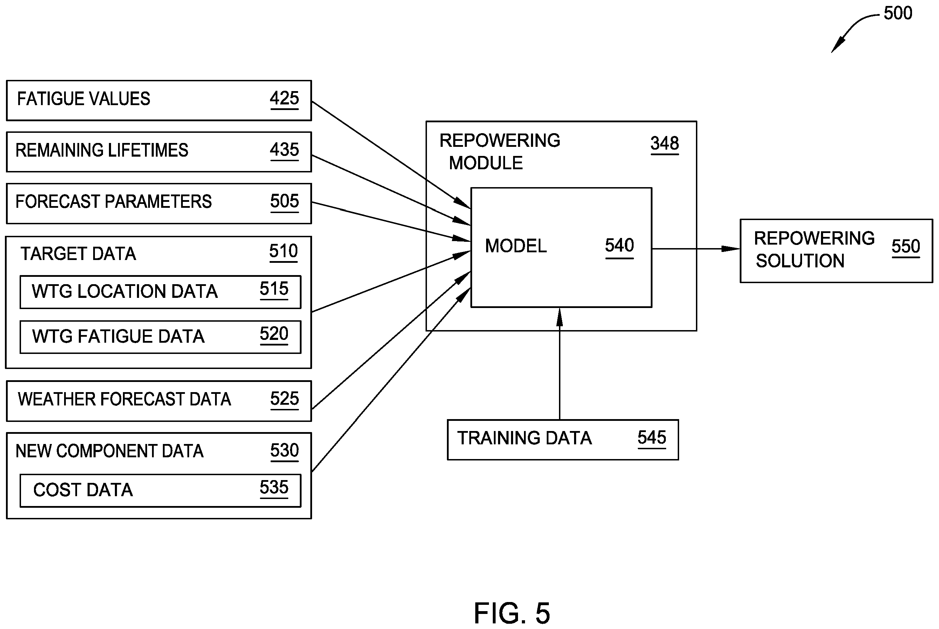

The memory 344 may include one or more modules for performing various functions described herein. In one embodiment, each module includes program code that is executable by one or more of the computer processors 342. However, other embodiments may include modules that are partially or fully implemented in hardware (i.e., circuitry) or firmware of the WTG controller 340. As shown, the memory 344 comprises a fatigue module 346 that determines fatigue values for one or more components of the WTG 100, which may be implemented in any suitable form. The memory 344 further comprises a repowering module 348 identifies repowering solutions for the one or more components of the WTG 100, which may be implemented in any suitable form. The fatigue module 346 is discussed below with respect to Figure 4, and the repowering module 348 is discussed below with respect to Figure 5.

Although shown as being implemented in the WTG controller 340, in other embodiments the functionality of the fatigue module 346 and/or the repowering module 348 is implemented partly or fully using other elements, such as using the one or more computer processors 316 of the WPP controller 315. In one or more embodiments, the functionality of the fatigue module 346 and/or the repowering module 348 is implemented partly or fully in the remote computing system 360. The remote computing system 360 comprises one or more computer processors 362 and a memory 364, which may have properties similar to the computer processors 316, 342 and the memory 318, 344. In one non-limiting example, each WTG 100-1, ..., 100-(N-1), 100-N comprises a respective fatigue module 346, and the repowering module 348 is implemented using the one or more computer processors 362 of the remote computing system 360. In another non-limiting example, the fatigue module 346 is implemented using the one or more computer processors 316 of the WPP controller 315, and the repowering module 348 is implemented using the one or more computer processors 362 of the remote computing system 360. In another non-limiting example, the fatigue module 346 and/or the repowering module 348 is implemented partly using the one or more computer processors 342 of the WTG controller 340 and partly using the one or more computer processors 362 of the remote computing system 360.

Figure 4 is a block diagram 400 illustrating inputs to an exemplary model 420 of a fatigue module 346. The features depicted in the block diagram 400 may be used in conjunction with other embodiments.

The model 420 of the fatigue module 346 receives a plurality of inputs: a control history 405, a weather history 410, and an operational history 415. The control history 405 includes data describing one or more control commands applied to the WTG (e.g., a WTG 100 of Figure 1), which may be represented in any suitable form. Some non-limiting examples of the control commands include active power references, reactive power references, torque references, blade pitch references, and so forth. The one or more control commands may represent substantially an entire control history of the WTG or a partial control history. Some non-limiting examples of a partial control history include a predetermined time window, counts of particular control command(s), timing for particular control command(s), and so forth.

The weather history 410 includes data describing one or more weather conditions affecting the WTG during its operational lifetime. In some embodiments, the data describes wind conditions at the WTG (e.g., wind speeds, wind directions). The data may further describe other weather conditions, such as ambient temperatures, humidity, precipitation, and so forth. The data of the weather history 410 may be acquired using sensors of the WTG and/or communicated from an external location to the fatigue module 346 (e.g., via a network).

The operational history 415 includes data reflecting sensor data 416 acquired using sensors of the WTG, as well as one or more operational parameters 418. The data of the operational history 415 may represent substantially an entire operational history of the WTG or a partial operational history. In some embodiments, the sensor data 416 and/or the one or more operational parameters 418 of the operational history 415 are unprocessed (e.g., raw sensor data provided to the fatigue module 346). In other embodiments, the sensor data 416 and/or the one or more operational parameters 418 of the operational history 415 are characterized (e.g., using statistical values).

The model 420 may have any suitable form for determining fatigue values 425 based at least in part on the control history 405, the weather history 410, and the operational history 415. The fatigue values 425 provide an estimate of fatigue loading applied to a component of the WTG over a period of time. The model 420 may provide estimates of the fatigue loading that would otherwise be measured at the component of the WTG (e.g., using strain gauges). For example, the model 420 may provide estimates of fatigue loading caused by a blade flapwise moment, a blade edgewise moment, a drivetrain torque, a drivetrain bending moment (e.g., a bending of the drivetrain in vertical and/or horizontal directions), and/or a tower bending moment. The fatigue values 425 that are output by the model 420 may be expressed in any suitable form. In some cases, the fatigue values 425 are expressed as a rainflow count, a load duration, and/or a revolution distribution. In other cases, the fatigue values 425 are determined from the estimated load values. For example, the Palmgren-Miner linear damage hypothesis (Miner's rule) may be used to transform cyclic variations in the estimated load values into a measure of the fatigue loading.

The fatigue values 425 may be used to calculate one or more remaining lifetimes 435 for the one or more components of the WTG. The one or more remaining lifetimes 435 may be expressed in any suitable form, such as a remaining period of operation at particular operational parameters, a fatigue quantity (e.g., a number of fatigue cycles remaining), and so forth. In some embodiments, the one or more remaining lifetimes 435 are determined by the fatigue module 346, either by the model 420 or separate from the model 420.

In some embodiments, the model 420 is created using machine learning techniques. Any suitable machine learning algorithms are contemplated, including supervised techniques (e.g., regression, classification) and unsupervised techniques (e.g., clustering, dimensionality reduction). In some embodiments, the model 420 is trained using training data 430 comprising one of: control history data (which may be similar to the control history 405), weather history data (which may be similar to the weather history 410), and operational history data (which may be similar to the operational history 415). Training the model 420 with the training data 430 develops a response surface that predicts the fatigue values 425 responsive to the inputs for the model 420 (the control history 405, the weather history 410, and the operational history 415).

In some embodiments, the training data 430 represents data acquired during operation of one or more WTGs (e.g., weather and strain gauge measurements). In other embodiments, the training data 430 is generated using a simulation tool. For example, an aero-elastic turbine load simulation may be performed using simulation tools such as Flex5 or HAWC2 (Horizontal Axis Wind turbine simulation Code 2nd generation), as would be familiar to those skilled in the art. The aero-elastic turbine load simulation may be used to determine predict fatigue values that would result from a large set of varying operational parameters. These predicted fatigue values are used to train the model 420 by applying a machine learning algorithm, as would be understood by those skilled in the art. After training, the fatigue values 425 output by the model 420 estimate (or model) the fatigue loading experienced by a component of a WTG based on the control history 405, the weather history 410, and the operational history 415.

To mitigate the operational and computational expenses needed to fully record the variation of operational parameters across an operating period, representative data (such as statistical data) may be input into the model 420, rather than raw data (e.g., an entire control history 405, an entire weather history 410, and an entire operational history 415). For example, the statistical data may include a statistical representation of the one or more operational parameters 418 experienced by the WTG during the particular operating period. Some non-limiting examples of the statistical data include a mean, a maximum value, a minimum value, a standard deviation, a rainflow count, a load duration, and/or a load distribution that are determined over the operating period and input into the model 420.

Further, the fatigue values 425 may be modelled for only a single operating period, or for multiple operating periods (i.e., a series of operating intervals). Some non-limiting examples of the duration of the operating period include: between 5 minutes and 15 minutes, 10 minutes, and between 1 second and 10 seconds, although any other suitable duration is contemplated. In some embodiments, the fatigue values 425 are determined online (or in "real-time"), i.e., upon completion of a particular operating period. In other embodiments, the fatigue values 425 are determined offline, e.g., based on stored values of the control history 405, the weather history 410, and the operational history 415.

Although the model 420 has been described as generating fatigue values 425 using the control history 405, the weather history 410, and the operational history 415 (including the sensor data 416 and the one or more operational parameters 418), other embodiments of the model 420 may use different inputs and/or different combinations of inputs. In one non-limiting example, the model 420 generates the fatigue values 425 using the one or more operational parameters 418.

Figure 5 is a block diagram 500 illustrating inputs to an exemplary model 540 of a repowering module 348. The features depicted in the block diagram 500 may be used in conjunction with other embodiments.

The model 540 of the repowering module 348 receives a plurality of inputs: the fatigue values 425, the remaining lifetimes 435, one or more forecast parameters 505, target data 510, weather forecast data 525, and new component data 530. The fatigue values 425 and the remaining lifetimes 435 are discussed above and may represent fatigue values and remaining lifetimes for one or more components of one or more WTGs.

Using the plurality of inputs, the model 540 identifies a repowering solution 550 for at least a first component of a WTG. The repowering solution 550 may be expressed in any suitable form. In one embodiment, the repowering solution 550 is identified as a target WTG in which to install the first component (e.g., as a replacement component). For example, the model 540 may determine that installation of the first component will increase (or extend) an operational lifetime of the target WTG. In another embodiment, the repowering solution 550 is identified as a replacement component for replacing the first component in the WTG. In another embodiment, the repowering solution 550 is identified as a location (or site) at which a WTG that includes the first component may be installed.

The one or more forecast parameters 505 describe operational parameters at which the WTG may be operated. One non-limiting example of the one or more forecast parameters 505 includes a forecast active power, which in some cases is greater than a rated power (e.g., a nominal or nameplate capacity) of the WTG. In this way, performing a repowering of the WTG according to the repowering solution 550 (e.g., installing a replacement component) may be effective to support an increased power production capacity of the WTG. Beneficially, by considering the one or more forecast parameters 505, the model 540 may be better able to identify replacement components supporting an increased power production capacity (and therefore, the potential for increased revenue by the WTG) when identifying the repowering solution 550.

The target data 510 describes one or more characteristics of one or more target WTGs, where each target WTG represents one possibility for installing the component according to the repowering solution 550. The target data 510 comprises WTG location data 515 and WTG fatigue data 520. The WTG location data 515 may be represented as an absolute location of the target WTG (e.g., geographic coordinates), a relative location from the WTG having the first component (e.g., a distance, a route used to transport the first component to the target WTG) and so forth. Beneficially, by considering the WTG location data 515, the model 540 may be better able to identify replacement components supporting lower costs of transport and/or installation when identifying the repowering solution 550 for the target WTG.

The WTG fatigue data 520 provides an estimate of fatigue loading applied to one or more components of the target WTG over a period of time. In some cases, the WTG fatigue data 520 is expressed as an operational lifetime (whether a total operational lifetime or a remaining operational lifetime). In some embodiments, the WTG fatigue data 520 for the target WTG is known (e.g., another WTG in the same WPP as the WTG having the first component, another commonly-owned or operated WTG at another site, and so forth). In other embodiments, the WTG fatigue data 520 may be estimated, e.g., using known or estimated wind conditions at the target WTG (corresponding to the WTG location data 515), a known or estimated age of the target WTG, a known or estimated power production by the target WTG, and so forth. For example, the model 420 of fatigue module 346 (described in Figure 4) may be used to estimate the WTG fatigue data 520. Beneficially, by estimating the WTG fatigue data 520, the model 540 may identify a suitable repowering solution 550 for an increased number of WTGs, including different types of WTGs (e.g., different models and/or manufacturers), WTGs operated by different operators, and so forth. In this way, the model 540 may be used to increase a potential market for used components in the repowering solution 550.

The weather forecast data 525 describes one or more weather conditions forecasted to affect the WTG having the first component and/or the target WTG during their respective operational lifetimes. In some embodiments, the weather forecast data 525 describes wind conditions at the WTG (e.g., wind speeds, wind directions). The weather forecast data 525 may further describe other weather conditions, such as ambient temperatures, humidity, precipitation, and so forth. Beneficially, by considering the weather forecast data 525, the model 540 may be able to better identify replacement components that provide a prolonged operational lifetime for the WTG and/or an increased power production of the WTG, which can result in increased revenue by the WTG.

The new component data 530 describes one or more characteristics associated with a new component for replacing the first component. In some cases, the new component data 530 provides reference value(s) that the model 540 may compare with value(s) of "used" replacement components (i.e., components that were previously used during operation of a WTG and that have an increased fatigue and/or reduced lifetime). The new component data 530 comprises cost data 535 reflecting one or more of the component cost, an installation cost (which may reflect lost production), a transportation cost, and so forth. The new component data 530 may further comprise an expected lifetime of the new component. Beneficially, by considering the new component data 530, the model 540 may identify a suitable repowering solution 550 that reduces costs and/or increases revenue of the WTG. For example, the model 540 may identify the repowering solution 550 as having a comparable expected lifetime to a new replacement component while being much more affordable than the new replacement component, which tends to increase the potential market for the repowering solution 550. In another example, the model 540 may identify the repowering solution 550 as supporting increased power production by the WTG, which offsets the cost of the replacement component and/or increases revenue by the WTG.

Thus, in some embodiments, the model 540 considers the costs of the replacement component itself, as well as the transportation costs and/or installation costs. In some embodiments, the model 540 further considers revenue generation capacity of the repowered WTG based on the operational lifetime and/or expected power production of the repowered WTG (i.e., once the replacement component has been installed). However, in other embodiments, the model 540 need not consider costs and/or revenue generation capacity when identifying the repowering solution 550. For example, other functionality of the repowering module 348 may receive a plurality of candidate repowering solutions, and selects the repowering solution 550 from the candidate repowering solutions using the costs and/or revenue generation capacity.

In some embodiments, the model 540 is created using machine learning techniques. Any suitable machine learning algorithms are contemplated, including supervised techniques (e.g., regression, classification) and unsupervised techniques (e.g., clustering, dimensionality reduction). In some embodiments, the model 540 is trained using training data 545 comprising one of: fatigue data (which may be similar to the fatigue values 425), remaining lifetime data (which may be similar to the remaining lifetimes 435), forecast parameter data (which may be similar to the forecast parameters 505), target training data (which may be similar to the target data 510), weather forecast training data (which may be similar to the weather forecast data 525), and the new component data 530. Training the model 540 with the training data 545 develops a response surface that identifies the repowering solution 550 responsive to the inputs for the model 540.

Although the model 540 has been described as generating a repowering solution 550 using the fatigue values 425, the remaining lifetimes 435, the one or more forecast parameters 505, the target data 510 (including the WTG location data 515 and the WTG fatigue data 520), the weather forecast data 525, and the new component data 530 (including the cost data 535), other embodiments of the model 540 may use different inputs and/or different combinations of inputs. In one non-limiting example, the model 540 generates the repowering solution 550 without considering the new component data 530.

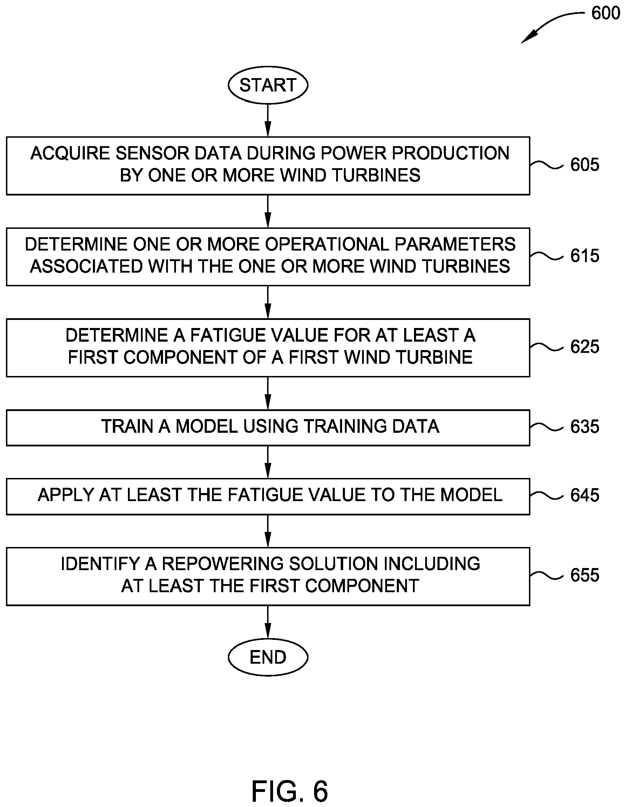

Figure 6 illustrates an embodiment of a method 600 of identifying a repowering solution for a wind turbine component, according to one or more embodiments. The method 600 may be used in conjunction with other embodiments. The method 600 begins at block 605, where sensor data is acquired during power production by one or more wind turbines. At block 615, one or more operational parameters associated with the one or more wind turbines are determined. At block 625, a fatigue value for a first component of a first wind turbine is determined. In some embodiments, the fatigue value is determined using the model 420 of Figure 4, which may be trained using the training data 430. At block 635, a model is trained using training data. In some embodiments, the model is the model 540 of Figure 5, trained by the training data 545. At block 645, at least the fatigue value is applied to the model. At block 655, a repowering solution is identified for the first component. In some embodiments, the repowering solution is identified as a target WTG in which to install the first component. For example, the model may determine that installation of the first component will increase (or extend) an operational lifetime of the target WTG. In other embodiments, the repowering solution is identified as a replacement component for replacing the first component in the WTG. In another embodiment, the repowering solution is identified as a location (or site) at which a WTG that includes the first component may be installed. The method 600 ends following completion of block 655.

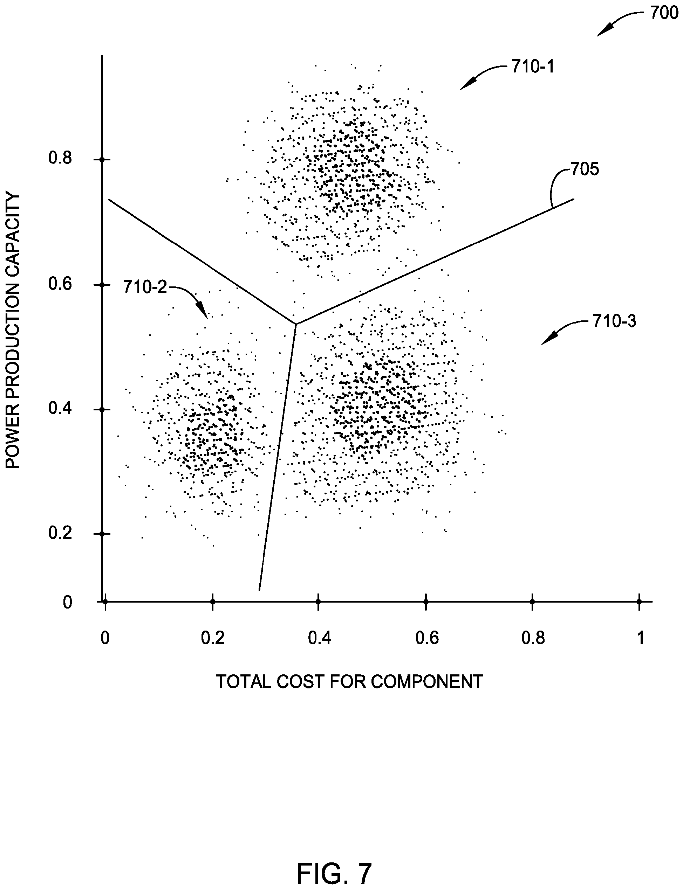

Figure 7 is a graph 700 illustrating clustering of data for candidate repowering solutions, according to one or more embodiments. The features depicted in graph 700 may be used in conjunction with other embodiments. For example, the decision boundary 705 that separates the different clusters 710-1, 710-2, 710-3 may be used during operation of the model 540 of Figure 5.

As shown, each of the data points on the graph 700 represents a candidate repowering solution for a first component, that is, a particular replacement component for a particular application (e.g., to be installed in a target WTG). For each candidate repowering solution, a power production capacity for the WTG (when the replacement component is installed) is plotted against a total cost for the replacement component (e.g., including transportation and installation). In some cases, the values of the power production capacity and the total cost values may be normalized or otherwise scaled.

In some embodiments, during training of the model, machine learning techniques are used to group the data points. As shown, clustering (one example of an unsupervised machine learning technique) is performed to define the decision boundary 705, which divides the data points into the different clusters 710-1, 710-2, 710-3. Thus, when the model is trained, input data are classified using the decision boundary 705 to identify the repowering solution for the first component.

Other supervised and unsupervised machine learning techniques are also contemplated. Further, while the decision boundary 705 is defined in a two-dimensional space, other implementations of the decision boundary 705 may be defined in hyper-dimensional spaces based on the complexity of the model.

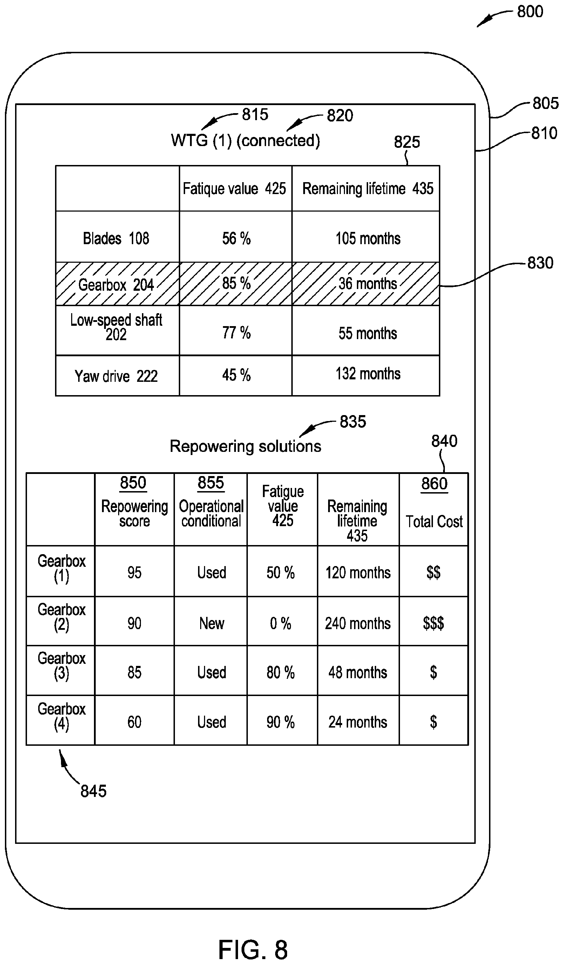

Figure 8 illustrates an exemplary interface 800 for identifying a replacement component, according to one or more embodiments. The features depicted in the interface 800 may be used in conjunction with other embodiments. For example, the interface 800 may be implemented using the remote computing system 360 of Figure 3, and may describe various components of the WTG 100 depicted in Figure 2.

As shown, a mobile computing device 805 (one example of the remote computing system 360) comprises a display 810. The mobile computing device 805 may have any suitable implementation, such as a smartphone, a tablet computer, a laptop computer, and so forth.

A wind turbine identifier 815, a connection status identifier 820, a chart 825, one or more repowering solutions 835, and a chart 840 are displayed on the display 810. The wind turbine identifier 815 (shown as "WTG (1)") provides a unique identifier (e.g., a serial number) associated with a particular WTG. The connection status identifier 820 (shown as "connected") indicates whether the mobile computing device 805 is communicatively connected with the WTG, e.g., with the WTG controller 340 via the network 350 of Figure 3.

The chart 825 lists several components of WTG (1), as well as corresponding fatigue values 425 and remaining lifetimes 435. In the example shown, the blades 108 have a fatigue value of 56% and a remaining lifetime of 105 months, the gearbox 205 has a fatigue value of 85% and a remaining lifetime of 36 months, the low-speed shaft 202 has a fatigue value of 77% and a remaining lifetime of 55 months, and the yaw drive 222 has a fatigue value of 45% and a remaining lifetime of 132 months. Other components and/or combinations of components are also contemplated. The row 830 for the gearbox 204 is highlighted, indicating a user selection of the gearbox (e.g., pressing the display 810 at the row 830).

The chart 840 lists several repowering solutions 835 for identifying a replacement component for the gearbox 204. In some embodiments, the repowering solutions 835 are identified using the model 540 of Figure 5.

For each of the repowering solutions 835, the chart 840 lists a replacement component 845, as well as corresponding repowering scores 850, operational conditions 855, fatigue values 425, remaining lifetimes 435, and total costs 860. In some embodiments, the repowering scores 850 are output by the model 540 using one or more of the operational conditions 855, the fatigue values 425, the remaining lifetimes 435, and the total costs 860 as inputs. In this example, greater values of the repowering scores 850 indicate a greater suitability as a replacement component for the component to be replaced (e.g., the gearbox 204). Further, in this example, greater values of the total costs 860 are indicated by more dollar signs ("$"), and lesser values are indicated by fewer dollar signs.

A first gearbox (as shown, "Gearbox (1)") has a repowering score of 95 for an operational condition of "Used", a fatigue value of 50%, a remaining lifetime of 120 months, and a total cost of "$$". A second gearbox (as shown, "Gearbox (2)") has a repowering score of 90 for an operational condition of "New", a fatigue value of 0%, a remaining lifetime of 240 months, and a total cost of "$$$" (i.e., more costly than the first gearbox).

The model 540 identifies Gearbox (1) as a more suitable replacement than Gearbox (2) for replacing WTG (1), despite having a greater fatigue value. For example, the fatigue value of Gearbox (1) (i.e., 50%) is closer to the fatigue values 425 of other components of WTG (1) (i.e., 56%, 77%, 45%) and should have a comparable remaining lifetime. Stated another way, the prolonged remaining lifetime provided by a new Gearbox (2) is unnecessary in view of the remaining lifetimes 435 of the other components of WTG (1). Additionally, Gearbox (1) provides a less costly repowering solution than Gearbox (2).

A third gearbox (as shown, "Gearbox (3)") has a repowering score of 85 for an operational condition of "Used", a fatigue value of 80%, a remaining lifetime of 48 months, and a total cost of "$". A fourth gearbox (as shown, "Gearbox (4)") has a repowering score of 60 for an operational condition of "Used", a fatigue value of 90%, a remaining lifetime of 24 months, and a total cost of "$".

The model 540 identifies Gearbox (3) and Gearbox (4) as being less suitable replacements than Gearbox (2), despite being less costly repowering solutions. For example, Gearbox (4) may not be suitable as having a greater fatigue value and a shorter remaining lifetime than the gearbox 204. Additionally, in some cases the increase in remaining lifetime to WTG (1) that is provided by repowering using Gearbox (3) may not justify the total cost that is associated with performing the repowering.

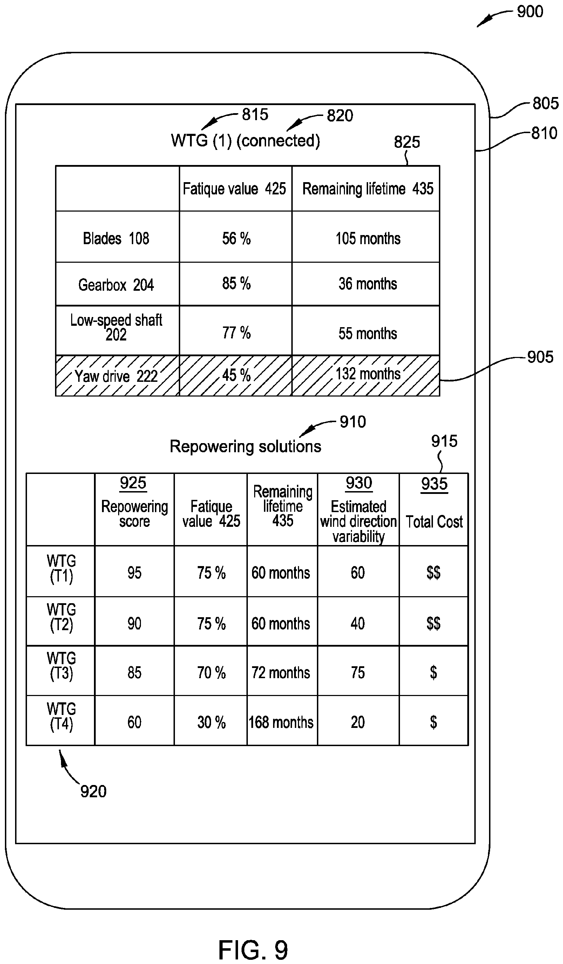

Figure 9 illustrates an exemplary interface 900 for identifying a target wind turbine, according to one or more embodiments. The features depicted in the interface 900 may be used in conjunction with other embodiments. For example, the interface 900 may be implemented using the remote computing system 360 of Figure 3, and may describe various components of the WTG 100 depicted in Figure 2.

The wind turbine identifier 815, the connection status identifier 820, the chart 825, one or more repowering solutions 910, and a chart 915 are displayed on the display 810. In the chart 825, the row 905 for the yaw drive 222 is highlighted, indicating a user selection of the gearbox (e.g., pressing the display 810 at the row 905). The chart 915 lists several repowering solutions 910 for identifying a target wind turbine for installing the yaw drive 222. In some embodiments, the repowering solutions 910 are identified using the model 540 of Figure 5.

For each of the repowering solutions 910, the chart 915 lists a target WTG 920, as well as corresponding repowering scores 925, fatigue values 425, remaining lifetimes 435, an estimated wind direction variability 930, and total costs 935. In some embodiments, the repowering scores 925 are output by the model 540 using one or more of the fatigue values 425, the remaining lifetimes 435, the estimated wind direction variability 930, and the total costs 935 as inputs. In this example, greater values of the repowering scores 925 indicate a greater suitability as a replacement component for the target WTG 920. Further, in this example, greater values of the total costs 935 are indicated by more dollar signs, and lesser values are indicated by fewer dollar signs.

A first target WTG (as shown, "WTG (T1)") has a repowering score of 95 for a fatigue value of 75%, a remaining lifetime of 60 months, an estimated wind direction variability of 60, and a total cost of "$$". A second target WTG (as shown, "WTG (T2)") has a repowering score of 90 for a fatigue value of 75%, a remaining lifetime of 60 months, an estimated wind direction variability of 40, and a total cost of "$$".

The model 540 identifies WTG (T1) as a more suitable target WTG than WTG (T2) for the yaw drive 222, despite their similar fatigue values and total costs. For example, the lesser fatigue value of the yaw drive 222 may be more suitable for the WTG (T2) because the greater estimated wind direction variability 930 may result in a greater fatigue on the yaw drive 222 over time.

A third target WTG (as shown, "WTG (T3)") has a repowering score of 85 for a fatigue value of 70%, a remaining lifetime of 72 months, an estimated wind direction variability of 75, and a total cost of "$". A fourth target WTG (as shown, "WTG (T4)") has a repowering score of 60 for a fatigue value of 30%, a remaining lifetime of 168 months, an estimated wind direction variability of 20, and a total cost of "$".

The model 540 identifies WTG (T3) and WTG (T4) as being less suitable target WTGs than WTG (T2), despite being less costly repowering solutions. For example, WTG (T4) may not be suitable as having a lesser fatigue value than the fatigue value of the yaw drive 222.

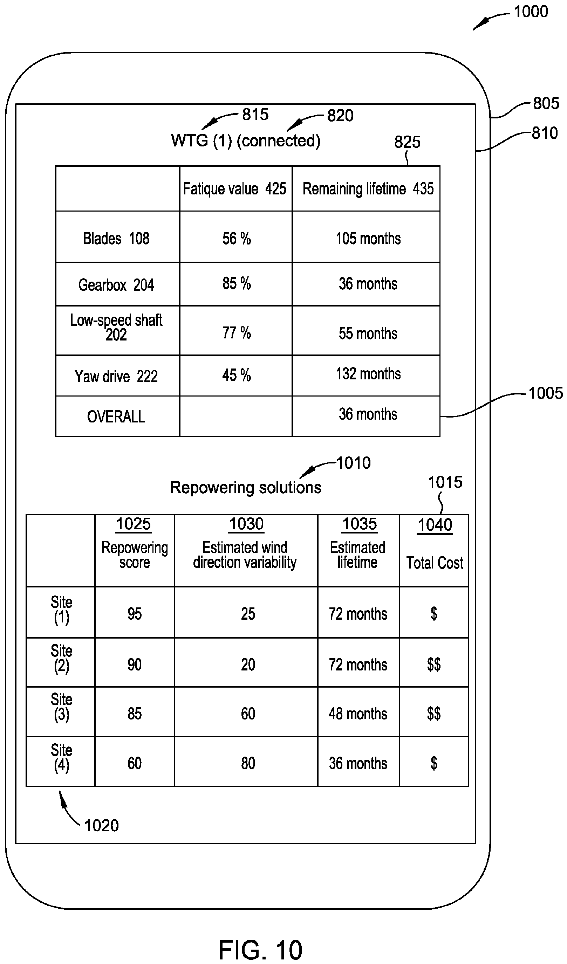

Figure 10 illustrates an exemplary interface 1000 for identifying a target site, according to one or more embodiments. The features depicted in the interface 1000 may be used in conjunction with other embodiments. For example, the interface 1000 may be implemented using the remote computing system 360 of Figure 3, and may describe various components of the WTG 100 depicted in Figure 2.

The wind turbine identifier 815, the connection status identifier 820, the chart 825, one or more repowering solutions 1010, and a chart 1015 are displayed on the display 810. In the chart 825, a row 1005 indicates an "overall" remaining lifetime 435 for the WTG (1) of 36 months. As shown, the overall remaining lifetime 435 for the WTG (1) is selected as a smallest remaining lifetime of the components of the WTG (1). Other methods for calculating the overall remaining lifetime 435 of the WTG (1) are also contemplated. The chart 1015 lists several repowering solutions 1010 for identifying a target site to relocate the WTG (1). In some embodiments, the repowering solutions 1010 are identified using the model 540 of Figure 5.

For each of the repowering solutions 1010, the chart 1015 lists a target site 1020, as well as corresponding repowering scores 1025, an estimated wind direction variability 1030, estimated lifetimes 1035, and total costs 1040. In some embodiments, the repowering scores 1025 are output by the model 540 using one or more of the repowering scores 1025, the estimated wind direction variability 1030, the estimated lifetimes 1035, and the total costs 1040. In this example, greater values of the repowering scores 1025 indicate a greater suitability as a target site for the WTG (1). Further, in this example, greater values of the total costs 1040 are indicated by more dollar signs, and lesser values are indicated by fewer dollar signs.

A first target site (as shown, "Site (1)") has a repowering score of 95 for an estimated wind direction variability of 25, an estimated lifetime of 72 months, and a total cost of "$". A second target site (as shown, "Site (2)") has a repowering score of 90 for an estimated wind direction variability of 20, an estimated lifetime of 72 months, and a total cost of "$$".

The model 540 identifies Site (1) as a more suitable target site than Site (2) for the WTG (1) despite their similar estimated wind direction variabilities and estimated lifetimes. For example, the lesser total cost of installing the WTG (1) at Site (1) may be dispositive.

A third target site (as shown, "Site (3)") has a repowering score of 85 for an estimated wind direction variability of 60, an estimated lifetime of 48 months, and a total cost of "$$". A fourth target site (as shown, "Site (4)") has a repowering score of 60 for an estimated wind direction variability of 80, an estimated lifetime of 36 months, and a total cost of "$".

The model 540 identifies Site (3) and Site (4) as being less suitable target sites than Site (2). For example, Site (4) may not be suitable as having a same estimated lifetime than the "overall" remaining lifetime 435 for the WTG (1). Additionally, in some cases the increase in overall remaining lifetime to the WTG (1) that is provided by repowering using Site (3) may not justify the total cost that is associated with performing the repowering.

In the preceding, reference is made to embodiments presented in this disclosure. However, the scope of the present disclosure is not limited to specific described embodiments. Instead, any combination of the features and elements provided above, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the aspects, features, embodiments, and advantages described herein are merely illustrative and are not considered elements or limitations of the appended claims except where explicitly recited in a claim(s).

As will be appreciated by one skilled in the art, the embodiments disclosed herein may be embodied as a system, method, or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer readable medium(s) having computer readable program code embodied thereon.

The present invention may be a system, a method, and/or a computer program product. The computer program product may include a computer-readable storage medium (or media) (e.g., a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing) having computer readable program instructions thereon for causing a processor to carry out aspects of the present invention.

Aspects of the present disclosure are described with reference to flowchart illustrations and/or block diagrams of methods, apparatus (systems) and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the Figures illustrate the architecture, functionality and operation of possible implementations of systems, methods and computer program products according to various embodiments. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method comprising:
acquiring sensor data during operation of one or more wind turbines;
determining, using the sensor data, one or more operational parameters associated with the one or more wind turbines;
determining, using the one or more operational parameters, a fatigue value for at least a first component of a first wind turbine of the one or more wind turbines;
applying at least the fatigue value to a model; and
identifying, using the model, a repowering solution including at least the first component of the first wind turbine.

2. The method of claim 1, further comprising:
training the model using training data comprising one of the following:
fatigue data;
remaining lifetime data;
target training data;
weather forecast training data; and
new component data.

3. The method of claim 2, further comprising:
performing an aero-elastic turbine load simulation to determine the fatigue data.

4. The method of claim 1 or 2, wherein the model is a first model, wherein the fatigue data is determined according to a second model, the method further comprising:
training the second model using training data comprising one of the following:
control history data;
weather history data; and
operational history data.

5. The method of any preceding claim, wherein the one or more operational parameters comprise one of the following:
a blade flapwise moment;
a blade edgewise moment;
a drivetrain torque;
a drivetrain bending moment;
a tower bending moment;
a wind speed;
a tower acceleration;
a rotor speed;
a pitch angle;
an active power; and
a blade root bending moment.

6. The method of any preceding claim, wherein acquiring the sensor data is performed using one or more controllers of the one or more wind turbines, and wherein the model is implemented in a mobile computing device that is communicatively coupled with the one or more controllers.

7. The method of any preceding claim, wherein the model is implemented in a controller of the one or more wind turbines.

8. The method of any preceding claim, wherein identifying the repower solution including at least the first component comprises:
accessing a remote database to identify a replacement component to replace the first component in the first wind turbine.

9. The method of any preceding claim, wherein identifying the repower solution including at least the first component comprises:
identifying a target wind turbine in which to install the first component.

10. The method of claim 9, wherein identifying the target wind turbine in which to install the first component comprises:
determining that installation of the first component will increase an operational lifetime of the target wind turbine.

11. The method of any preceding claim, wherein identifying the repower solution including at least the first component comprises identifying a target site to relocate the first wind turbine.

12. A computing device comprising:
one or more computer processors configured to:
communicatively couple with one or more controllers of one or more wind turbines;
receive a fatigue value for at least a first component of a first wind turbine of the one or more wind turbines;
apply at least the fatigue value to a model; and
identify, using the model, a repowering solution including at least the first component of the first wind turbine.

13. The computing device of claim 12, wherein the one or more computer processors are further configured to:
train the model using training data comprising one of the following:
fatigue data;
remaining lifetime data;
target training data;
weather forecast training data; and
new component data.

14. The computing device of claim 12 or 13, wherein identifying the repower solution including at least the first component comprises:
accessing a remote database to identify a replacement component to replace the first component in the wind turbine.

15. The computing device of claim 12 or 13, wherein identifying the repower solution including at least the first component comprises:
identifying a target wind turbine in which to install the first component.

16. The computing device of claim 12 or 13, wherein identifying the repower solution including at least the first component comprises identifying a target site to relocate the first wind turbine.

17. A computer program product comprising:
software code adapted to control a wind turbine when executed on a processing system, wherein the computer program product is adapted to perform the method of any of claims 1 to 11.
